# DEMANDE DE BREVET EUROPEEN

(11) **EP 0 606 184 A1**
(43) Date de publication de la demande: **13.07.1994**
(21) Numéro de dépôt: 94400022.3
(22) Date de dépôt: 05.01.1994
(51) Int. Cl.: B29C 31/04, D04H 1/70, B27N 5/00

(54) **Procédé et dispositif pour la production d'articles par compactage de fibres ou granulés à l'aide d'un courant d'air et articles ainsi produits**

(30) Priorité: 06.01.1993 FR 9300053
(71) Demandeur: Weisskopf, Charles, André, F-60000 Beauvais (FR); Weisskopf, Francis, F-60000 Beauvais (FR)
(72) Inventeur: Weisskopf, Charles, André, F-60000 Beauvais (FR); Weisskopf, Francis, F-60000 Beauvais (FR)
(74) Mandataire: Colas, Jean-Pierre

(57) **Abrégé**

L'invention concerne notamment un dispositif pour la production d'un article conformé intermédiaire, constitué de fibres ou granulés compactés, caractérisé en ce qu'il comprend :
- un moule démontable en au moins deux parties (11, 12), dont au moins une des faces est percée d'une pluralité de petites perforations ;
- des cloisons compartimentant l'espace adjacent à la face perforée du moule et extérieur à ce dernier, en plusieurs compartiments C₁ à Cₙ équipés d'obturateurs O₁ à Oₙ, respectivement, permettant de fermer ou d'ouvrir chaque compartiment ;
- des moyens (19) pour envoyer un courant d'air véhiculant de fibres ou des granulés dans l'ouverture d'alimentation du moule ; et
- des moyens pour ouvrir séquentiellement les obturateurs.

## Description

L'invention concerne un procédé pour la production d'articles par compactage dans un moule de fibres ou de granulés à l'aide d'un courant d'air, puis liage des fibres ou granulés compactés, un dispositif pour la mise en oeuvre de ce procédé, et des articles produits à l'aide de ce procédé et/ou dispositif.

On connaît de nombreux dispositifs mécaniques, pneumatiques ou autres, capables de produire une nappe continue de fibres textiles d'épaisseur sensiblement constante. Il est bien connu aussi d'incorporer une petite quantité d'un liant thermo-activable aux fibres pour pouvoir lier les fibres après le nappage par un traitement thermique approprié. Des nappes obtenues de cette façon sont utiles notamment pour la réalisation d'éléments isolants phoniques et/ou thermiques, par exemple pour isoler le plancher d'automobiles.

L'inconvénient de ces nappes toutefois est de devoir être découpées à la forme requise pour l'application particulière visée ce qui engendre une quantité de chutes considérable qu'on ne sait pas recycler. En outre, les nappes étant d'épaisseur fixe, il est malcommode et coûteux de réaliser des éléments d'épaisseur variable à partir de telles nappes, car cela exige de venir coller, ou fixer autrement, des morceaux de nappe additionnels aux endroits où une épaisseur isolante plus importante est requise. De tels éléments isolants d'épaisseur variable sont pourtant demandés, notamment par les constructeurs d'automobiles, qui désirent disposer d'éléments s'adaptant au mieux à la structure propre du modèle à équiper. Egalement, il se présente l'inconvénient que des éléments plans, même souples, ne s'adaptent pas toujours parfaitement à la forme de l'emplacement destiné à les recevoir. Il serait donc désirable de pouvoir disposer d'éléments préconformés épousant parfaitement la forme de l'emplacement récepteur.

Afin de remédier aux inconvénients sus-mentionnés et d'apporter, d'une manière générale, des améliorations au domaine de la production d'articles formés de fibres ou de granulés compactés et liés, l'invention propose un procédé et un dispositif de conception originale, qui sont utilisables notamment pour la production d'articles conformés d'épaisseur variable et de densité uniforme.

Plus précisément, l'invention concerne un procédé pour la production d'un article conformé, constitué de fibres ou granulés compactés et liés, caractérisé en ce qu'il consiste :
- à prévoir un moule, démontable en au moins deux parties, délimitant un volume de moulage, au moins une des faces de ce moule étant percée d'une pluralité de petites perforations réparties sur sa surface, ledit moule comportant, en outre, une ouverture d'alimentation en fibres ou granulés ;
- à prévoir un cloisonnage de l'espace adjacent à la face perforée du moule et extérieur à ce dernier, en plusieurs compartiments C₁ à Cₙ équipés d'obturateurs O₁ à Oₙ. respectivement, permettant de fermer ou d'ouvrir chaque compartiment, ces compartiments étant répartis depuis l'ouverture d'alimentation (compartiment C₁) jusqu'à la partie du moule la plus éloignée de ladite ouverture (compartiment Cₙ) ;
- à envoyer un courant d'air véhiculant des fibres ou des granulés dans l'ouverture d'alimentation du moule, ces fibres ou granulés étant ultérieurement consolidables en un article unitaire ;
- à ouvrir séquentiellement les obturateurs Oₙ,... Oᵢ,...O₁ en commençant par l'obturateur Oₙ associé au compartiment Cₙ, un obturateur donné Oᵢ où i < n n' étant ouvert que lorsque la partie du moule correspondant au compartiment C_{i + 1} se trouve remplie de fibres ou de granulés, de manière à remplir complètement le moule de fibres ou granulés et à obtenir ainsi un article conformé intermédiaire, constitué de fibres ou granulés compactés ; et
- ensuite, à consolider cet article intermédiaire en un article conformé, constitué de fibres ou granulés compactés et liés.

Selon un mode de mise en oeuvre préféré de ce procédé, la face du moule qui est perforée est la face inférieure du moule.

Selon un autre mode de mise en oeuvre préféré de ce procédé, le moule présente une épaisseur variable.

Selon encore un autre mode de mise en oeuvre préféré de ce procédé, l'étape de consolidation implique un traitement thermique visant à activer un liant préalablement incorporé aux fibres.

Facultativement, si on le désire, l'étape de liage peut être précédée d'un pressage mécanique visant à densifier l'article final, ou bien être exécutée tandis que l'article est pressé.

L'invention concerne aussi un dispositif pour la production d'un article conformé intermédiaire, constitué de fibres ou granulés compactés, caractérisé en ce qu'il comprend :
- un moule démontable en au moins deux parties, dont au moins une des faces est percée d'une pluralité de petites perforations réparties sur sa surface, ledit moule comportant, en outre, une ouverture d'alimentation en fibres ou granulés ;
- des cloisons compartimentant l'espace adjacent à la face perforée du moule et extérieur à ce dernier, en plusieurs compartiments C₁ à Cₙ équipés d'obturateurs O₁ à Oₙ, respectivement, permettant de fermer ou d'ouvrir chaque compartiment, lesdits compartiments étant répartis depuis l'ouverture d'alimentation (compartiment C₁) jusqu'à la partie du moule la plus éloignée de ladite ouverture (compartiment Cₙ) ;
- des moyens pour envoyer un courant d'air véhiculant des fibres ou des granulés dans l'ouverture d'alimentation du moule ; et
- des moyens pour ouvrir séquentiellement les obturateurs On,...Oi,...O₁ en commençant par l'obturateur Oₙ associé au compartiment Cₙ, un obturateur donné Oᵢ où i < n n'étant ouvert que lorsque la partie du moule correspondant au compartiment Cᵢ₊₁ se trouve remplie de fibres ou de granulés.

Selon une particularité préférée, la face du moule qui est perforée est sa face inférieure.

Selon une autre particularité préférée, le moule repose, de façon amovible, sur les cloisons de compartimentage.

Selon une autre particularité préférée, les moyens pour envoyer un courant d'air véhiculant des fibres ou des granulés à l'ouverture d'alimentation comprennent un ventilateur aspirant l'air provenant d'un caisson dans lequel débouchent les compartiments à obturateur et envoyant l'air dans un conduit relié à ladite ouverture d'alimentation, une trémie garnie de fibres ou de granulés débouchant dans ledit conduit en amont de l'ouverture d'alimentation, et un compresseur d'air pour appliquer auxdits fibres ou granulés une pression supérieure à celle régnant dans ledit conduit d'air.

L'invention concerne, enfin, un article conformé, constitué de fibres ou granulés compactés et liés, caractérisé en ce que cet article est monobloc et présente des parties d'épaisseurs différentes.

Selon un mode de réalisation préféré, cet article est constitué de fibres de coton liées par un liant thermo-durci. Selon un mode de réalisation particulièrement préféré, l'article est constitué de fibres de coton liées par un liant thermo-durci et est un élément phoniquement isolant pour un véhicule automobile.

Le procédé et le dispositif de l'invention peuvent être mis en oeuvre avec toutes fibres ou tous granulés pourvu que la plupart de ces fibres ou granulés ne franchissent pas les perforations pratiquées dans la face perforée du moule qui joue le rôle d'un séparateur. A titre indicatif, la taille ou diamètre des perforations peut aller de 0,5 à 6 mm, de préférence de 2 à 5 mm.

Des exemples de fibres et granulés utilisables sont des fibres textiles d'origine naturelle, artificielles ou synthétiques, des fibres de carbone, des fibres de verre, et des fibres de bois. Des fibres de coton recyclées sous forme de petits amas sont un exemple particulier de fibres utilisables. Des exemples de granulés sont des granulés de polyéthylène. Ces fibres et granulés doivent avoir été traitées au préalable par un liant, comme cela est connu en soi dans le domaine de la formation de nappes. Des exemples de liants sont des résines phénoliques, des résines acryliques, des polyuréthannes, parmi beaucoup d'autres.

Le cloisonnage contigu à la face perforée du moule a pour fonction de canaliser le courant d'air véhiculant les fibres ou granulés d'abord vers la partie du moule la plus éloignée de l'ouverture d'alimentation en fibres ou granulés afin de remplir cette partie prioritairement, puis, par l'ouverture séquentielle des obturateurs, de remplir successivement des parties du moule de plus en plus proches de l'ouverture d'alimentation, évitant ainsi tout risque de formation d'un bouchon de fibres ou granulés intermédiaire ce qui aurait pour conséquence la formation de cavités non remplies et donc la production d'un article défectueux. Egalement, pour minimiser le risque de la formation de tels bouchons, il vaut mieux éviter que le moule présente des zones d'une épaisseur inférieure à 2 cm environ.

La vitesse du courant d'air n'est pas très critique, pour autant qu'elle soit suffisante pour que ledit courant puisse véhiculer les fibres ou granulés. Habituellement, des vitesses moyennes, de l'ordre de 5 à 15 mètres/seconde, conviennent, mais ne doivent pas être considérées comme limitatives.

Du fait que les perforations occasionnent une perte de charge, laquelle augmente au fur et à mesure que des fibres ou granulés s'accumulent par dessus les perforations, il existe une différence de pression de part et d'autre de la face perforée du moule. En réglant cette différence de pression, on peut modifier, dans certaines limites, la densité de l'article conformé compacté, une pression plus élevée correspondant à un article plus dense.

Pour obtenir un débit et une vitesse du courant d'air suffisant, il convient de prévoir, sur la face perforée, un nombre de perforations important du fait que leur diamètre est nécessairement limité par la fonction de séparation qu'elles doivent assumer. De ce fait, il est recommandé que la face perforée du moule soit l'une des faces principales et que la densité de perforations soit élevée. A titre indicatif la surface des perforations peut représenter de 40 à 60% de la surface de la tôle.

Le courant d'air peut être engendré par tous moyens convenables, par exemple par un ventilateur.

De préférence, le courant d'air parcourt un circuit fermé. Cela présente l'avantage de recycler automatiquement toutes fibres ou granulés qui pourraient passer à travers les perforations et d'éviter de répandre dans l'atmosphère environnante des petits débris ou poussières venant des fibres ou granulés utilisés.

L'ouverture des obturateurs peut se faire à la main d'après l'observation visuelle du remplissage par les fibres ou granulés ou, de préférence, être automatisée en utilisant des senseurs détectant le remplissage des parties du moule correspondant aux divers compartiments, ou encore être asservie en fonction de la pression régnant dans le moule, celle-ci augmentant dès lors que la partie du moule dont le compartiment est ouvert se trouve remplie de fibres ou granulés.

Il est à noter que l'on peut ouvrir un, deux, voire trois obturateurs adjacents à la fois, en fonction de la géométrie du moule et de la nature de la matière à compacter.

Après remplissage de la région du moule correspondant à un obturateur donné, ce dernier pourra être soit refermé, par exemple dans le cas où la matière compactée est très poreuse, comme dans le cas de fibres, soit laissé ouvert dans le cas où la matière compactée est peu poreuse, comme dans le cas de granulés. Dans tous les cas spécifiques, il sera à la portée de l'homme du métier de déterminer le mode de fonctionnement le plus approprié, par de simples essais de routine.

L'opération de consolidation (liage) peut être effectuée dans le moule même ou dans une des parties de celui-ci, après avoir extrait le moule du dispositif ayant servi à l'opération de moulage par compactage pneumatique sus-décrite, ou encore après extraction de l'article compacté du moule si cet article présente une cohésion suffisante. Habituellement, l'opération de liage impliquera un chauffage si on utilise comme liant un produit thermo-activable.

Toutefois, on pourrait aussi utiliser des liants durcissant à température ambiante, par exemple sous l'effet de l'humidité ambiante.

La description qui va suivre, faite en se référant aux dessins annexés, fera bien comprendre l'invention.

Sur les dessins :
la figure 1 est une vue schématique en coupe transversale d'un article selon l'invention ; et
la figure 2 est une vue schématique en coupe d'un dispositif expérimental selon l'invention adapté à la production de l'article de la figure 1.

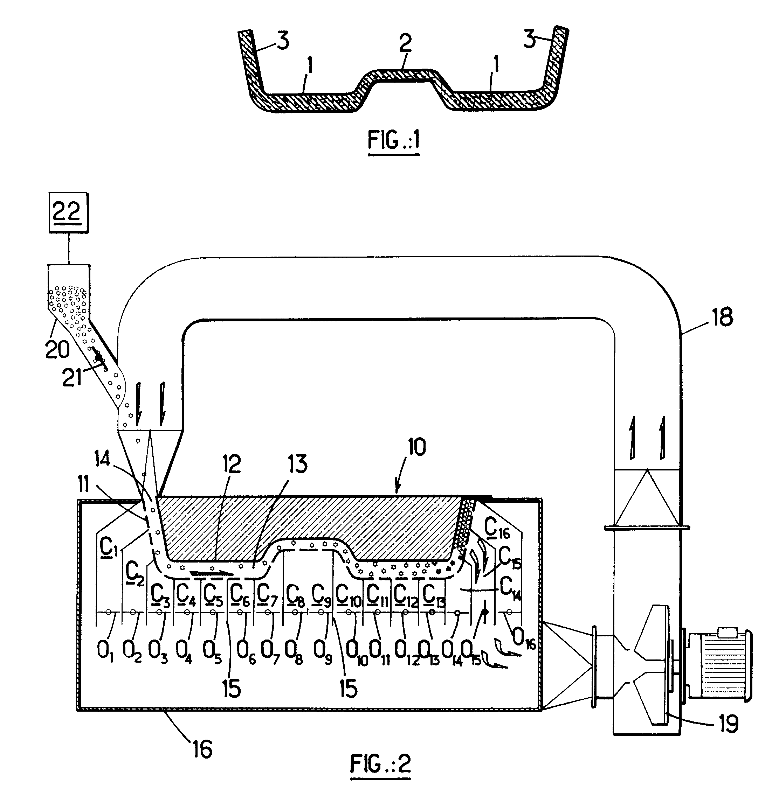

Sur la figure 1, on a représenté un élément phoniquement isolant destiné à être disposé sur le plancher d'une automobile, à l'emplacement des places avant, à cheval sur le tunnel central. Cet élément comporte un fond 1 avec ressaut central 2 (prévu pour s'adapter à la forme du tunnel central) et des bords relevés 3, l'épaisseur du ressaut 2 étant moindre que celle des autres parties de l'élément.

Un tel élément peut être constitué, par exemple, de fibres de coton recyclées, liées par un liant phénolique thermo-durcissable.

Sur la figure 2, le dispositif représenté comprend un moule, de référence générale 10, constitué d'une partie inférieure en tôle profilée perforée 11 et d'une partie supérieure 12, par exemple en une matière transparente comme le polyméthacrylate de méthyle ou similaire, ménageant entre elles un volume de moulage 13. Le fait que la partie 12 soit transparente permet d'observer le remplissage du moule par les fibres ou granulés. La partie supérieure 12, ménage, sur un des côtés du moule, une ouverture 14, de forme allongée, servant à l'alimentation du moule en fibres ou granulés. Les perforations de la partie 11 peuvent avoir, à titre indicatif, un diamètre de l'ordre de 0,5 à 6 mm environ, de préférence de l'ordre de 2 à 5 mm. En tout cas, le diamètre des perforations doit être le plus gros possible tout en empêchant le passage de la plus grande partie des fibres ou des granulés introduits dans le moule, étant entendu, toutefois, qu'on peut tolérer qu'une partie mineure des fibres ou granulés passe à travers les perforations.

La tôle perforée 11 repose, de façon amovible, sur des cloisons, telles que 15, disposées dans un caisson 16. Ces cloisons, dans le cas illustré, s'étendent sensiblement parallèlement à l'ouverture 14 et sont équidistantes l'une de l'autre. La fonction de ces cloisons est de compartimenter l'espace situé immédiatement en dessous de la tôle 11 en une pluralité de compartiments C. Dans le cas illustré, il y a seize compartiments, référencés C₁ à C₁₆, mais ce nombre peut varier, bien entendu, en fonction de la taille et/ou de la forme de l'article à produire. Les compartiments sont munis, à leur partie inférieure, d'organes d'obturation O₁ à O₁₆, respectivement, tels que des volets pivotants, permettant de les ouvrir ou de les fermer indépendamment les uns des autres, c'est-à-dire de les mettre ou non en communication avec le volume interne du caisson 16.

Le caisson 16 est, de son côté, relié à sa base à un conduit 18, dont l'autre extrémité est raccordée à l'ouverture d'alimentation 14, et dans lequel est monté un ventilateur 19 destiné à aspirer l'air du caisson et à l'envoyer à l'ouverture 14. Ce faisant, le caisson 16 se trouve sous dépression.

Le dispositif comprend, en outre, une trémie close 20 d'alimentation, munie d'une vanne 21 et chargée de fibres, dont la base est raccordée au conduit 18 juste en amont de l'ouverture d'alimentation 14 et dont le sommet est raccordé à un compresseur d'air 22 dont le rôle est d'appliquer sur les fibres une pression d'air supérieure à celle régnant dans le conduit 18 de façon à pouvoir "injecter" les fibres dans le courant d'air parcourant le conduit 18, lorsqu'on ouvre la vanne 21.

Le fonctionnement de ce dispositif est le suivant :

La vanne 21 et les obturateurs O₁ à O₁₅ étant fermés et l'obturateur O₁₆ étant ouvert, on met en route le ventilateur 19 pour générer un courant d'air parcourant la boucle conduit 18 - ouverture 14 - volume de moulage 13 perforations - compartiment C₁₆ - obturateur O₁₆, puis on ouvre la vanne 21 après avoir mis le compresseur en route. Ce faisant, des fibres sont injectées dans le courant d'air et transportées par celui-ci dans le volume de moulage 13 jusqu'à ce qu'elles soient arrêtées par la tôle perforée 11 qui joue le rôle d'un séparateur. Les fibres s'accumulent et remplissent rapidement la partie du volume 13 située au niveau du compartiment C₁₆, comme on peut l'observer à travers la partie transparente 12. Les fibres qui s'accumulent font obstacle au passage de l'air en direction du compartiment C₁₆ si bien que la pression d'air dans le moule augmente, tandis que la dépression dans le caisson 16 s'accroît. Ceci a tendance à exercer un effet de tassement sur les fibres retenues par la tôle perforée. Une fois la partie du volume 13 correspondant au compartiment C₁₆ remplie, on ferme l'obturateur O₁₆ et on ouvre l'obturateur O₁₅ de façon à remplir la partie du volume 13 correspondant au compartiment C₁₅, et ainsi de suite jusqu'au remplissage de la partie du volume 13 correspondant au compartiment C₁ qui termine le moulage avec production d'un article conformé intermédiaire. On ferme alors la vanne 21 et on arrête le ventilateur 19. Après équilibrage des pressions, on enlève la partie supérieure 12 du moule, puis la partie inférieure 11 du moule qui contient l'article intermédiaire. La partie 11 avec l'article intermédiaire peut alors être mise dans un four pour activer le liant thermo-activable de façon à consolider l'article intermédiaire en l'article final lié.

Habituellement, il se produit une rétraction et une densification importantes de l'article au cours du traitement thermique de liage. Ceci est bien connu de l'homme du métier qui sait calculer les dimensions que doit présenter un moule pour obtenir un article de dimensions désirées après traitement thermique.

A titre indicatif, à partir d'amas de fibres de coton recyclé prétraités par liant résine phénolique, on a pu obtenir des articles ayant une masse spécifique à l'état cru de l'ordre de 30 kg/m³ et, après pressage et traitement thermique de liage à 180°C, une masse spécifique de l'ordre de 60 kg/m3. Les articles présentaient une masse spécifique uniforme qui leur conférait d'excellentes propriétés d'isolation phonique.

## Revendications

1. Procédé pour la production d'un article conformé, constitué de fibres ou granulés compactés et liés, caractérisé en ce qu'il consiste :
- à prévoir un moule, démontable en au moins deux parties, délimitant un volume de moulage, au moins une des faces de ce moule étant percée d'une pluralité de petites perforations réparties sur sa surface, ledit moule comportant, en outre, une ouverture d'alimentation en fibres ou granulés ;
- à prévoir un cloisonnage de l'espace adjacent à la face perforée du moule et extérieur à ce dernier, en plusieurs compartiments C₁ à Cₙ équipés d'obturateurs O₁ à Oₙ respectivement, permettant de fermer ou d'ouvrir chaque compartiment, ces compartiments étant répartis depuis l'ouverture d'alimentation (compartiment C₁) jusqu'à la partie du moule la plus éloignée de ladite ouverture (compartiment Cₙ) ;
- à envoyer un courant d'air véhiculant des fibres ou des granulés dans l'ouverture d'alimentation du moule, ces fibres ou granulés étant ultérieurement consolidables en un article unitaire ;
- à ouvrir séquentiellement les obturateurs Oₙ,... Oᵢ,...O₁ en commençant par l'obturateur Oₙ associé au compartiment Cₙ, un obturateur donné Oᵢ où i < n n' étant ouvert que lorsque la partie du moule correspondant au compartiment C_{i+ 1} se trouve remplie de fibres ou de granulés, de manière à remplir complètement le moule de fibres ou granulés et à obtenir ainsi un article conformé intermédiaire, constitué de fibres ou granulés compactés ; et
- ensuite, à consolider cet article, intermédiaire en un article conformé, constitué de fibres ou granulés compactés et liés.

2. Procédé selon la revendication 1, caractérisé en ce que la face du moule qui est perforé est la face inférieure du moule.

3. Procédé selon la revendication 1 ou 2, caractérisé en ce que le moule présente une épaisseur variable.

4. Procédé selon l'une quelconque des revendications 1 à 3, caractérisé en ce que l'étape de consolidation implique un traitement thermique visant à activer un liant préalablement incorporé aux fibres.

5. Procédé selon l'une quelconque des revendications 1 à 3, caractérisé en ce que le courant d'air suit un chemin en boucle.

6. Dispositif pour la production d'un article conformé intermédiaire, constitué de fibres ou granulés compactés, caractérisé en ce qu'il comprend :
- un moule démontable en au moins deux parties, dont au moins une des faces est percée d'une pluralité de petites perforations réparties sur sa surface, ledit moule comportant, en outre, une ouverture d'alimentation en fibres ou granulés ;
- des cloisons compartimentant l'espace adjacent à la face perforée du moule et extérieur à ce dernier, en plusieurs compartiments C₁ à Cₙ équipés d'obturateurs O₁ à Oₙ, respectivement, permettant de fermer ou d'ouvrir chaque compartiment, lesdits compartiments étant répartis depuis l'ouverture d'alimentation (compartiment C₁) jusqu'à la partie du moule la plus éloignée de ladite ouverture (compartiment Cₙ) ;
- des moyens pour envoyer un courant d'air véhiculant de fibres ou des granulés dans l'ouverture d'alimentation du moule ; et
- des moyens pour ouvrir séquentiellement les obturateurs On,...Oi,...O₁ en commençant par l'obturateur Oₙ associé au compartiment Cₙ, un obturateur donné Oᵢ où i < n n'étant ouvert que lorsque la partie du moule correspondant au compartiment Cᵢ₊₁ se trouve remplie de fibres ou de granulés.

7. Dispositif selon la revendication 6, caractérisé en ce que la face du moule qui est perforé est sa face inférieure.

8. Dispositif selon la revendication 6 ou 7, caractérisé en ce que le moule repose, de façon amovible, sur les cloisons de compartimentage.

9. Dispositif selon l'une quelconque des revendications 6 à 8, caractérisé en ce que les moyens pour envoyer un courant d'air véhiculant des fibres ou des granulés à l'ouverture d'alimentation comprennent un ventilateur aspirant l'air provenant d'un caisson dans lequel débouchent les compartiments à obturateur et envoyant l'air dans un conduit relié à ladite ouverture d'alimentation, une trémie garnie de fibres ou de granulés débouchant dans ledit conduit en amont de l'ouverture d'alimentation, et un compresseur d'air pour appliquer auxdits fibres ou granulés une pression supérieure à celle régnant dans ledit conduit d'air.

10. Article conformé, constitué de fibres ou granulés compactés et liés, caractérisé en ce que cet article est monobloc et présente des parties d'épaisseurs différentes.
